# EUROPÄISCHE PATENTSCHRIFT

(11) **EP 4 219 773 B1**
(45) Veröffentlichungstag und Bekanntmachung des Hinweises auf die Patenterteilung: **09.10.2024**
(21) Anmeldenummer: 23152997.5
(22) Anmeldetag: 02.03.2021
(51) Int. Cl.: C21B 13/12, C21B 13/00, C21B 13/14

(54) **VERFAHREN ZUM HERSTELLEN VON FLÜSSIGEM ROHEISEN AUS EINEM DRI-PRODUKT**
METHOD FOR PRODUCING LIQUID PIG IRON FROM A PRODUCT OF DSL
PROCÉDÉ DE PRODUCTION DE FONTE BRUTE LIQUIDE À PARTIR D'UN PRODUIT DRI

(30) Priorität: 30.04.2020 DE 102020205493
(43) Veröffentlichungstag der Anmeldung: 02.08.2023
(62) Teilanmeldung aus: 21709923.3
(73) Patentinhaber: SMS group GmbH, 41069 Mönchengladbach (DE)
(72) Erfinder: Schlüter, Jochen, 44265 Dortmund (DE); Nörthemann, Ralf, 45549 Sprockhövel (DE); Henkel, Thomas, 47057 Duisburg (DE); Tockert, Paul, 6830 30 Berburg (LU)
(74) Vertreter: Hemmerich & Kollegen

(56) Entgegenhaltungen:
- EP-A1- 1 437 420
- US-A1- 2004 076 539
- US-A1- 2013 098 202
- MANCHISI JAMES ET AL: "Ironmaking and Steelmaking Slags as Sustainable Adsorbents for Industrial Effluents and Wastewater Treatment: A Critical Review of Properties, Performance, Challenges and Opportunities", SUSTAINABILITY, vol. 12, no. 5, 9 March 2020 (2020-03-09), pages 2118, XP055791941, DOI: 10.3390/su12052118
- JSW CEMENT LTD: "Ground Granulated Blast Furnace Slag", 30 June 2015 (2015-06-30), pages 1 - 4, XP093034787, Retrieved from the Internet <URL:https://www.jswcement.in/pdf/JSW-GGBS-Technical-Data-Sheet.pdf> [retrieved on 20230327]

## Beschreibung

Die vorliegende Erfindung betrifft ein Verfahren zum Herstellen von flüssigem Roheisen, insbesondere aus einem direkt reduzierten Eisenprodukt (DRI-Produkt) in einem Einschmelzaggregat, eine granulierte Schlacke sowie eine Anlage zum Herstellen von flüssigem Roheisen.

Derartige Verfahren und Anlagen sind aus dem Stand der Technik grundsätzlich bekannt. So offenbart beispielsweise die WO 2017/207472 A1 ein Verfahren und eine Anlage zur Herstellung von flüssigem Roheisen aus einem direkt reduziertem Eisenprodukt (DRI), das in einem Lichtbogenofen (EAF) aufgeschmolzen wird. Das eingesetzte DRI weist einen hohen Kohlenstoffgehalt auf, der in Form von Eisencarbid vorliegt und sich energetisch vorteilhaft auf das Schmelzbad auswirkt. Weiterhin offenbaren die europäischen Patentanmeldungen EP 1 160 338 A1 sowie EP 1 160 337 A1 ein hoch-energiesparendes Verfahren zum Vorheizen und finalen Reduzieren eines direkt reduzierten Eisenprodukts (DRI). Dieses wird in einem Lichtbogenofen (EAF) eingeschmolzen, wobei das während des Einschmelzvorgangs entstehende CO-haltige Abgas in dem Prozess wiederverwendet wird.

Die europäische Patentanmeldung EP 1 298 224 A1 offenbart ebenfalls ein Verfahren zur Herstellung von flüssigem Roheisen, in dem ein direkt reduziertes Eisenprodukt durch Lichtbogenerwärmung aufgeschmolzen wird. Die Lichtbogenerwärmung umfasst hauptsächlich eine Strahlungserwärmung, die zu einer verbesserten Lebensdauer des Feuerfestmaterials des Schmelzofens führt. EP 1 437 420 A1 offenbart ebenfalls ein Verfahren zur Herstellung von flüssigem Roheisen.

Ein weiteres Verfahren zur Herstellung von flüssigem Roheisen ist aus der US 5,810,905 bekannt. Hierbei wird zunächst ein Eisen-haltiges Feinerz in einem Wirbelschichtreaktor in Anwesenheit von Wasserstoff zu Eisencarbid umgesetzt, welches anschließend einem Lichtbogenofen (SAF) zugeführt und zu flüssigem Roheisen aufgeschmolzen und verflüssigt wird.

Obwohl aus dem Stand der Technik diverse Verfahren und Anlagen zum Herstellen von flüssigem Roheisen aus einem direkt reduziertem Eisenprodukt bekannt sind, besteht weiterhin ein Bedarf nach verbesserten Verfahren sowie Anlagen.

Vor diesem Hintergrund liegt der vorliegenden Erfindung daher die Aufgabe zu Grunde ein gegenüber dem Stand der Technik verbessertes Verfahren sowie eine gegenüber dem Stand der Technik verbesserte Anlage zur Herstellung von flüssigem Roheisen anzugeben.

Erfindungsgemäß wird die Aufgabe durch ein Verfahren mit den Merkmalen des Patentanspruchs 1 gelöst.

Weitere vorteilhafte Ausgestaltungen der Erfindung sind in den abhängig formulierten Ansprüchen angegeben. Die in den abhängig formulierten Ansprüchen einzeln aufgeführten Merkmale sind in technologisch sinnvoller Weise miteinander kombinierbar und können weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Gemäß einem ersten Aspekt betrifft die vorliegende Erfindung ein Verfahren zur Herstellung von flüssigem Roheisen, umfassend die Schritte:
i) Bereitstellen eines direkt reduzierten Eisenprodukts (DRI-Produkt) mit einem Eisengehalt von mindestens 75.0 Gew.-%, einem Kohlenstoffgehalt von zumindest 0.10 Gew.-% sowie einem Gehalt an sauren und basischen Schlackenbestandteilen ausgewählt aus der Gruppe umfassend CaO, SiO₂, MgO und Al₂O₃ von maximal 15.0 Gew.-%,
ii) Zuführen des DRI-Produkts unter Zugabe von Schlackenbildnern in ein elektrisch betriebenes Einschmelzaggregat,
iii) Zuführen von weiteren Eisen- und/oder Kohlenstoffkomponenten bis zu einem Anteil von 30 Gew.-% bezogen auf die DRI-Produktmenge in das elektrisch betriebene Einschmelzaggregat,
iv) Einschmelzen des DRI-Produkts sowie ggf. der weiteren Eisen- und/oder Kohlenstoffkomponenten in Gegenwart der Schlackenbildner, so dass eine flüssige Roheisenphase und eine flüssige Schlackenphase gebildet wird,
v) Einstellen der Schlackenphase derart, dass diese eine Basizität von (CaO+MgO/SiO₂) von 0.95 bis 1.50 aufweist,
vi) Abstechen der flüssigen Roheisenphase, und
vii) Abstechen und Granulieren der Schlackenphase.

Überraschenderweise hat sich gezeigt, dass über die Einstellung einer für elektrisch betriebene Einschmelzaggregate, wie beispielsweise für EAF-, SAF- oder IF-Aggregate, unüblichen Schlackenanalyse mit einer chemischen Zusammensetzung ähnlich eines Hochofens, granulierfähige Schlacken erhalten werden, die industriell verwertbar sind. So bilden diese beispielsweise ein bevorzugtes Produkt bei der Zementherstellung, da sie den Einsatz von Brennstoffen bei der Zementerzeugung reduzieren und damit wesentlich zur Reduzierung der CO₂ Emissionen führen. Die Schlacken müssen somit nicht aufwendig aufgearbeitet oder sogar deponiert werden, sondern liefern einen Marktwert, der sich wirtschaftlich vorteilhaft auf den Herstellungsprozess auswirkt.

Durch die Erzeugung von flüssigem Roheisen aus dem eingesetzten DRI-Produkt und die angestrebte Schlackenfahrweise kann zudem die existierende Prozessroute zur Rohstahlerzeugung in einem integrierten Hüttenwerk mit Hochofen, Roheisenentschwefelung und LD-Konverter beibehalten werden. Der besondere Vorteil liegt darin, dass die bestehende Hochofenkapazität sukzessiv ergänzt, in Teilen oder vollständig durch das erfindungsgemäße Verfahren ersetzt werden kann, wobei weder die metallurgischen Kernprozessabläufe noch die Prozessabläufe der Behandlung der Nebenprodukte, wie z. B. Hochofen-, Entschwefelungs- und Stahlwerksschlacken, signifikant geändert werden müssen.

Das DRI-Produkt kann zum einen direktreduziertes Eisen in Form von sog. Premium "DR-grade Pellets", oder alternativ Eisen aus sog. Hochofenpellets mit höheren Schlackenbestandanteilen, und/oder Mischungen hiervon umfassen. Dabei gilt, dass durch die Erhöhung der Schlackenbestandanteile die Menge an Schlacke im Einschmelzaggregat steigt. In einer bevorzugten Ausführungsvariante weist das direkt reduzierte Eisenprodukt (DRI-Produkt) einen Eisengehalt von mindestens 80.0 Gew.-%, mehr bevorzugt von mindestens 85.0 Gew.-% auf.

Die Schlackenbestandteile können je nach Erzqualität schwanken und bilden daher in dem eingesetzten DRI-Produkt einen Anteil von maximal 15.0 Gew.-%, bevorzugt einen Anteil von maximal 12.0 Gew.-%. Das DRI-Produkt ist allerdings nicht frei von den Schlackenbestandteilen und umfasst diese vorzugsweise mit einem Anteil von zumindest 2.0 Gew.-%, mehr bevorzugt mit einem Anteil von zumindest 4.0 Gew-% in dem eingesetzten DRI-Produkt.

Um eine granulierfähige Schlacke zu erhalten, muss diese eine Fähigkeit zur Verglasung aufweisen, wobei die Verglasung im Allgemeinen als Funktion der Basizität und der Zusammensetzung darstellbar ist. Erfindungsgemäß ist daher vorgesehen, dass die Schlackenphase derart eingestellt wird, dass diese eine Basizität B3 von (CaO+MgO/SiO₂) von 0.95 bis 1.50, bevorzugt eine Basizität B3 von (CaO+MgO/SiO₂) von 1.0 bis 1.40, mehr bevorzugt eine Basizität B3 von (CaO+MgO /SiO₂) von 1.0 bis 1.25 aufweist.

Um das Granulieren der Schlackenphase zu erleichtern, sollte die Schlackenphase vorteilhafterweise ein spezifisches Fließverhalten aufweisen. Als bevorzugt hat sich hierbei gezeigt, wenn die Schlackenphase derart eingestellt wird, dass diese eine Viskosität von 0.10 bis 0.80 Pa*s, vorzugsweise eine Viskosität von 0.30 bis 0.50 Pa*s aufweist. Die Viskosität kann im Allgemeinen als eine Funktion der Zusammensetzung sowie der Temperatur beschrieben werden. In diesem Zusammenhang ist daher besonders bevorzugt vorgesehen, dass die Schlackenphase bei einer Abstichtemperatur im Bereich von 1300 °C bis 1600 °C, mehr bevorzugt bei einer Abstichtemperatur im Bereich von 1350 °C bis 1550 °C, und ganz besonders bevorzugt bei einer Abstichtemperatur im Bereich von 1400 °C bis 1500 °C abgestochen wird.

In einer besonders bevorzugten Ausführungsvariante wird das Granulieren als Nass- oder Trockengranulation durchgeführt.

In einer weiteren vorteilhaften Ausführungsvariante erfolgt die Zugabe der Schlackenbildner automatisch über ein in eine Anlagenautomation integriertes Prozessmodel, anhand dessen die Zugabemenge an den Schlackenbildnern berechnet und als Funktion von Prozessparametern festgelegt wird. Das Prozessmodell basiert dabei vorteilhafterweise auf Massen- und Energiebilanzen für Schmelze und Schlacke. Über die automatisierte Zugabe werden die notwendigen Einstellungen der gewünschten Metall- und/oder Schlackenparameter sichergestellt. Für das komplexe Schlackensystem CaO, SiO₂, MgO, Al₂O₃ mit seinen zahlreichen kristallinen Mischoxiden kann das Prozessmodell zudem ein geeignetes Modell zur thermodynamischen Beschreibung der flüssigen Schlackenphase umfassen, welches die Sättigungsgrenzen bzgl. der Oxide und Mischoxide als Funktion von Zusammensetzung und Temperatur beschreibt.

Vorteilhafterweise werden die Schlackenbildner dem Einschmelzprozess mengenmäßig so zugesetzt, dass die für die erfolgreiche Granulation geforderten Eigenschaften Fließverhalten sowie die Fähigkeit zur Verglasung in der flüssigen Schlackenphase erzielt werden. Als besonders bevorzugt können die Schlackenbildner gemäß Schritt ii) bis zu einem Anteil von maximal 15.0 Gew.-%, und ganz besonders bevorzugt bis zu einem Anteil von maximal 10.0 Gew.-% bezogen auf die zugeführte DRI-Produktmenge dem Einschmelzprozess zugeführt werden. Die Schlackenbildner sind dabei vorzugsweise ausgewählt aus der Gruppe umfassend CaO, SiO₂, MgO und/oder Al₂O₃. Sofern erforderlich können weitere Mischoxide, wie beispielsweise CaSiOs, Ca₂Si₂O₅, Mg₂SiO₄, CaAl₂O₄, etc. zugesetzt werden.

Eine besonders granulierfähige Schlackenphase umfasst eine Zusammensetzung, die aus zumindest 70.0 % Gew.-% aus den Komponenten CaO, MgO und SiO₂ gebildet wird.

Grundsätzlich wird der Prozess mit einem Massenanteil von 100 % an dem DRI-Produkt bezogen auf eine Charge durchgeführt. Alternativ können dem erfindungsgemäßen Prozess weitere Eisen- und/oder Kohlenstoffkomponenten pro Charge hinzugefügt werden. Sofern das Zuführen der weiteren Eisen- und/oder Kohlenstoffkomponenten vorgesehen ist, so werden diese gemäß Schritt iii) bis zu einem Anteil von maximal 30.0 Gew.-%, bevorzugt von maximal 25.0 Gew.-%, mehr bevorzugt von maximal 20.0 Gew.-% bezogen auf die zugeführte DRI-Produktmenge zugeführt. Die weiteren Eisen- und/oder Kohlenstoffkomponenten sind dabei ausgewählt aus der Gruppe umfassend kaltes Roheisen, Satzkohle und/oder Stahlschrott.

Das direkt reduzierte Eisenprodukt (DRI-Produkt) kann dem Einschmelzaggregat in unterschiedlicher Form zugegeben werden. Bevorzugt wird das direkt reduzierte Eisenprodukt (DRI-Produkt) dem Einschmelzaggregat in heißer Form als HDRI-Produkt (sog. Hot DRI), in kalter Form als CDRI-Produkt (sog. Cold DRI), in heißer Brikettform als HBI-Produkt (sog. Hot Briquetted DRI) und/oder in partikulärer Form, vorzugsweise mit einem mittleren Partikeldurchmesser von maximal 10.0 mm, mehr bevorzugt mit einem mittleren Partikeldurchmesser von maximal 5.0 mm zugeführt.

Das im Direktreduktionsverfahren erzeugte DRI-Produkt hat üblicherweise einen Kohlenstoffgehalt zwischen 0.50 und 6.0 Gew.-%. Um eine roheisenähnliche Analyse in der flüssigen Roheisenphase zu erzielen, ist es daher ggf. erforderlich die gemäß Schritt iv) gebildete flüssige Roheisenphase auf einen Kohlenstoffgehalt von zumindest 2.50 Gew.-% aufzukohlen. Dies kann durch die Zugabe von kaltem Roheisen oder einem anderem Kohlenstoffträger in den Einschmelzprozess geschehen. Die in dem Prozess hergestellte flüssige Roheisenphase soll im weiteren Prozess in eine herkömmliche Prozessroute eingeschleust werden, beispielsweise in dem sie einer Roheisenentschwefelungsanlage oder einem Konverter zur weiteren Verarbeitung zugeführt wird. Daher darf der Kohlenstoffgehalt einen maximalen Gehalt von 6.0 Gew.-%, mehr bevorzugt von maximal 4.50 Gew.-% nicht überschreiten.

Die gemäß dem erfindungsgemäßen Verfahren hergestellte Roheisenphase weist bevorzugt die folgende Zusammensetzung in Gew.-% auf:

| | |
|---|---|
| - Kohlenstoffgehalt | 2.50 - 5.0, mehr bevorzugt von 3.50 - 4.50, |
| - Silizium | 0.10 - 0.80, mehr bevorzugt 0.20 - 0.50, |
| - Mangan | 0.50 - 5.0, mehr bevorzugt 0.50 - 1.50, |
| - sowie unvermeidbare Verunreinigungen an Schwefel und Phosphor von jeweils maximal 0.06, mehr bevorzugt jeweils maximal 0.04. | |

Das DRI-Produkt wird vorzugsweise im Rahmen einer CO₂-armen Stahlerzeugung in einer Direktreduktionsanlage hergestellt und über eine Fördereinrichtung dem Einschmelzaggregat und/oder einem wärmeisolierten Bunkerreservoir unter Schutzatmosphäre zugeführt. Als Reduktionsgas kann sowohl herkömmliches Reformergas auf Basis von Erdgas als auch mit Wasserstoff angereichertes Reformergas mit einem Wasserstoffgehalt von bis zu 100 % verwendet werden. Der zur Anreicherung benötigte Wasserstoff wird bevorzugt mit Hilfe von grünem Strom energetisch und damit CO₂-neutral hergestellt.

In einer besonders bevorzugten Ausführungsvariante werden das DRI-Produkt und/oder die Schlackenbildner aus einem, vorzugsweise wärmeisolierten, Bunkerreservoir dem Einschmelzaggregat zugeführt. Das in dem Bunkerreservoir zwischengelagerte DRI-Produkt wird unter einer Schutzgasatomsphäre gelagert. Alternativ kann das DRI-Produkt direkt aus der Direktreduktionsanlage über eine Fördereinrichtung mit Metallförderbändern dem Einschmelzaggregat und/oder einem wärmeisolierten Bunkerreservoir unter Schutzgasatmosphäre zugeführt werden. Das DRI-Produkt hat weist hierbei eine Temperatur von 750 bis 800 °C.

In einem weiteren nicht beanspruchten Aspekt betrifft die vorliegende zudem eine granulierte Schlacke erhalten durch das erfindungsgemäße Verfahren. Diese umfasst die folgende Zusammensetzung in Gew.-%:

| | |
|---|---|
| - SiO₂ | 30.0 - 50.0, vorzugsweise 35.0 - 40.0 |
| - CaO | 25.0 - 50.0, vorzugsweise 30.0 - 43.0 |
| - Al₂O₃ | 5.0 - 15.0, vorzugsweise 8.0 - 12.0 |
| - MgO | 2.0 - 15.0, vorzugsweise 4.0 - 12.0, |
| - sowie unvermeidbare Verunreinigungen ausgewählt aus der Gruppe umfassend Eisen (Fe), MnO₂ und/oder Schwefel (S). | |

Vorzugsweise beträgt der Eisengehalt in den unvermeidbaren Verunreinigungen maximal 2.0 Gew.-%, mehr bevorzugt 1.0 Gew.-%.

Besonders bevorzugt beträgt der Gesamtanteil an den Komponenten SiO₂, CaO und MgO in der granulierten Schlacke mindestens 70.0 Gew.-%, mehr bevorzugt 75.0 Gew.-%, noch mehr bevorzugt 80.0 Gew.-% und am meisten bevorzugt 85.0 Gew.-%.

Die gemäß dem erfindungsgemäßen Prozess erzeugte granulierte Schlacke zeichnet sich dadurch aus, dass diese einen glasigen Erstarrungsanteil von zumindest 70.0 Gew.-%, bevorzugt von zumindest 90.0 Gew.-%, und mehr bevorzugt von zumindest 95.0 Gew.-%. Ein Glasanteil von mehr als 90.0 Gew.-% wird vorzugsweise durch eine Nassgranulation erreicht.

Vorteilhafterweise weist die granulierte Schlacke zudem einen Gesamteisengehalt (Fe) von maximal 2.0 Gew-%, bevorzugt einen Gesamteisengehalt (Fe) von maximal 1.0 Gew.-% auf.

Je nach Anwendungsfall der granulierten Schlacke können auch ggf. vorhandene Nebenbestandteile von Bedeutung sein, die sich bei der umwelttechnischen Prüfung der Einsatzeignung in den Eluaten (Chlorid, Sulfat, Schwermetalle etc.) wiederfinden. In einer bevorzugten Ausführungsvariante kann die granulierte Schlacke daher einen Eluat-Zuordnungsparameter von 0 (uneingeschränkte Einbau) oder 1 (eingeschränkter offener Einbau) gemäß der gültigen gesetzlichen Richtlinien (NGS - TR Boden der LAGA M20 aus dem Mai 2013) aufweisen.

Gemäß einem weiteren nicht beanspruchten Aspekt betrifft die vorliegende Erfindung zudem eine Anlage zur Herstellung von flüssigem Roheisen, umfassend eine Direktreduktionsanlage zur Herstellung eines direkt reduzierten Eisenprodukts (DRI-Produkt), ein elektrisch betriebenes Einschmelzaggregat, in dem das direkt reduzierte Eisenprodukt (DRI-Produkt) einschmelzbar ist, sowie eine Fördereinrichtung, über die das direkt reduzierte Eisenprodukt (DRI-Produkt) von der Direktreduktionsanlage zu dem Einschmelzaggregat transportierbar ist.

Das Einschmelzaggregat ist vorzugsweise in Form eines Elektrolichtbogenofens (EAF), eines Submerged Arc Furnace (SAF) oder eines Induktionsofens (IF) ausgebildet.

Die Fördereinrichtung ist vorzugsweise in Form eines Metallförderbandes ausgebildet und weist eine Schutzgasatmosphäre auf.

Weiterhin weist die Anlage vorteilhafterweise ein wärmeisoliertes Bunkerreservoir auf.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen:
Fig. 1 eine schematische Darstellung eines Flussdiagramms anhand dessen das erfindungsgemäße Verfahren erläutert wird,
Fig. 2 eine schematisch stark vereinfachte Darstellung einer Anlage gemäß einer ersten Ausführungsvariante, und
Fig. 3 eine schematisch stark vereinfachte Darstellung einer Anlage gemäß einer zweiten Ausführungsvariante.

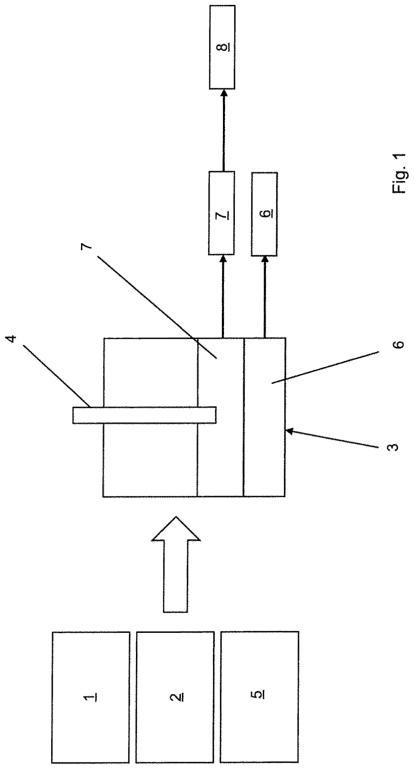

Gemäß Figur 1 wird das erfindungsgemäße Verfahren in einer möglichen Ausführungsvariante anhand eines Flussdiagramms erläutert.

Zur Herstellung von flüssigem Roheisen wird zunächst ein direkt reduziertes Eisenprodukt 1 (DRI-Produkt) bereitgestellt, welches in der vorliegend dargestellten Ausführungsvariante einen Eisengehalt von 80.0 Gew.-%, einen Kohlenstoffgehalt von 3.0 Gew.-% sowie einen Gehalt an sauren und basischen Schlackenbestandteilen ausgewählt aus der Gruppe umfassend CaO, SiO₂, MgO und Al₂O₃ von insgesamt maximal 12.0 Gew.-% aufweist und in Form eines Hot DRI-Produkts mit einer Temperatur von ca. 750 - 800 °C vorliegt.

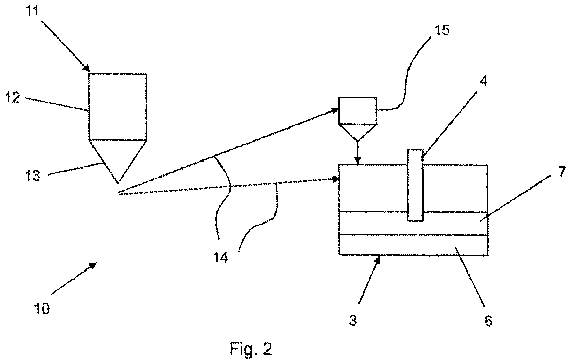

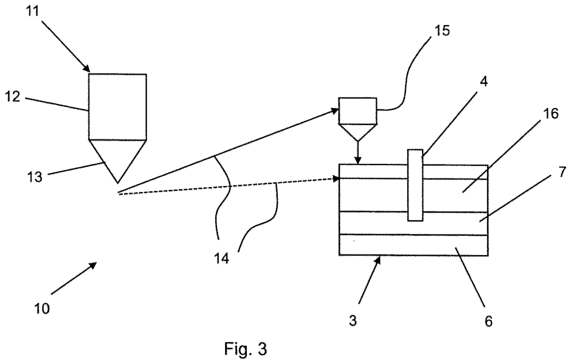

Das DRI-Produkt 1 kann beispielsweise im Rahmen einer CO₂-armen Stahlerzeugung in einer Direktreduktionsanlage 11 hergestellt, wie sie in den Figuren 2 und 3 dargestellt ist.

In einem nächsten Schritt wird das DRI-Produkt 1 unter Zugabe von Schlackenbildnern 2 einem elektrisch betriebenen Einschmelzaggregat 3 zugeführt. Die Schlackenbildner 2 sind in der vorliegend dargestellten Ausführungsvariante ausgewählt aus der Gruppe umfassend CaO, SiO₂, MgO und Al₂O₃ und werden dem Einschmelzaggregat 3 in einer Menge von bis zu 10.0 Gew.-% bezogen auf die zugeführte DRI-Produktmenge zugegeben. Das Einschmelzaggregat 3 ist vorliegend in Form eines Elektrolichtbogenofens (EAF) ausgeführt und umfasst zumindest eine Elektrode 4, wie beispielsweise eine Kohleelektrode.

Der in Figur 1 dargestellte Prozess kann grundsätzlich mit einem Massenanteil von 100 % an dem DRI-Produkt bezogen auf eine Batchcharge durchgeführt werden. In der dargestellten Ausführungsvariante werden dem Einschmelzaggregat 3 jedoch weitere Eisen- und/oder Kohlenstoffkomponenten 5 in Form von Kohle und Stahlschrott zugegeben. Der Massenanteil der Eisen- und Kohlenstoffkomponenten 5 beträgt im vorliegenden Beispiel 20.0 Gew.-% bezogen auf die zugeführte DRI-Produktmenge.

Das Gemisch aus DRI-Produkt 1, Schlackenbildner 2 sowie der Eisen- und Kohlenstoffkomponenten 5 wird sodann mit Hilfe von elektrischem Strom aufgeschmolzen, so dass eine flüssige Roheisenphase 6 und eine flüssige Schlackenphase 7 gebildet wird.

Über die Zugabe der Schlackenbildner 5 wird die Schlackenphase 7 derart eingestellt, dass diese in der vorliegend dargestellten Ausführungsvariante eine Basizität B3 von (CaO+MgO/SiO₂) von 0.95 bis 1.25 sowie eine Viskosität von 0.30 bis 0.50 Pa*s aufweist. Sofern diese Schlackenparameter erreicht werden, wird die Schlackenphase 7 bei einer Abstichtemperatur im Bereich von 1350 °C bis 1550 °C abgestochen und sodann granuliert. In einem letzten Schritt wird die flüssige Roheisenphase 6 abgestochen und beispielsweise einem Konverterstahlwerk zur weiteren Verarbeitung zugeführt.

Die abgestochene Roheisenphase 6 weist die folgende Zusammensetzung in Gew.-% auf:

| | |
|---|---|
| - Kohlenstoffgehalt | 3.50, |
| - Silizium | 0.3, |
| - Mangan | 0.50, |
| - Rest Eisen sowie unvermeidbare Verunreinigungen an Schwefel und Phosphor von jeweils maximal 0.04. | |

Die abgestochene Schlackenphase 7 wird über eine Nassgranulation zu einer granulierten Schlacke 8 verarbeitet, die die folgende Zusammensetzung in Gew.-% aufweist:

| | |
|---|---|
| - SiO₂ | 45.0, |
| - CaO | 40.0 |
| - Al₂O₃ | 8.0, |
| - MgO | 5.0, |
| - sowie unvermeidbare Verunreinigungen umfassend Eisen, MnO₂ und Schwefel (S) von insgesamt kleiner 2.0. | |

Die granulierte Schlacke zeichnet sich dadurch aus, dass diese einen glasigen Erstarrungsanteil von 95.0 Gew.-% und einen Gesamteisengehalt (Fe) von kleiner 1.0 Gew.-% aufweist.

Figur 2 zeigt eine schematisch stark vereinfachte Darstellung einer Anlage 10 gemäß einer ersten Ausführungsvariante.

Die Anlage 10 zur Herstellung von flüssigem Roheisen umfasst eine Direktreduktionsanlage 11 zur Herstellung des direkt reduzierten Eisenprodukts 1. Die Direktreduktionsanlage 11 umfasst einen ersten oberen Teil, der einen Reduktionsschacht 12 bildet, sowie einen zweiten unteren Teil, der ein Kühlteil 13 bildet. Als Reduktionsgas kann herkömmliches Reformergas auf Basis von Erdgas, Koksgas oder anderen Hüttengasen als auch wasserstoffangereichertes Reformergas mit einem maximalen Wasserstoffgehalt von bis zu 100% verwendet werden. Der benötigte Wasserstoff wird vorteilhafterweise aus grünem Strom CO₂ neutral hergestellt.

Das in der vorliegenden Direktreduktionsanlage 11 erzeugte DRI-Produkt 1 kann je nach Wasserstoffanteil im Reduktionsgas einen variablen Anteil an Kohlenstoff aufweisen. Um eine roheisenähnliche Analyse aufzuweisen kann der Kohlenstoffgehalt durch gezieltes Einblasen von Erdgas zu Kühlzwecken im unteren Kühlteil 13 angehoben werden.

Weiterhin umfasst die Anlage 10 ein elektrisch betriebenes Einschmelzaggregat 3, in dem das direkt reduzierte Eisenprodukt 1 (DRI-Produkt) einschmelzbar ist, sowie eine Fördereinrichtung 14, über die das direkt reduzierte Eisenprodukt 1 von der Direktreduktionsanlage 11 zu dem Einschmelzaggregat 3 transportierbar ist.

Das Einschmelzaggregat 3 ist vorliegend in Form eines Elektrolichtbogenofens (EAF) ausgebildet.

Das in der Direktreduktionsanlage 11 hergestellte DRI-Produkt 1 kann über die Fördereinrichtung 14, die vorliegend in Form eines Metallförderbandes ausgebildet ist und eine Schutzgasatmosphäre aufweist, direkt dem Einschmelzaggregat 3 zugeführt werden, wie dies anhand der gestrichelten Linie gezeigt ist. Bevorzugt wird das DRI-Produkt 1 über die Fördereinrichtung 14 zunächst einem wärmeisolierten und unter Schutzatmosphäre stehendem Bunkerreservoir 15 zugeführt, aus dem es sodann, vorzugsweise automatisiert, dem Einschmelzaggregat 3 zugeführt wird.

In Figur 3 ist eine schematisch stark vereinfachte Darstellung der Anlage 10 in einer zweiten Ausführungsvariante gezeigt. Im Unterschied zu der in Figur 2 dargestellten Ausführungsvariante ist das Einschmelzaggregat 3 vorliegend in Form eines Submerged Arc Furnace (SAF) ausgebildet. Diese Prozessweise kennzeichnet sich vorliegend dadurch aus, dass im Einschmelzaggregat 3 eine Schaumschlackenphase 16 zugegen ist, die die Elektrode 4 umgibt.

### Bezugszeichenliste

- 1: direkt reduziertes Eisenprodukt / DRI-Produkt
- 2: Schlackenbildner
- 3: Einschmelzaggregat
- 4: Elektrode
- 5: Eisen- und/oder Kohlenstoffkomponenten
- 6: flüssige Roheisenphase
- 7: flüssige Schlackenphase
- 8: granulierte Schlacke
- 10: Anlage
- 11: Direktreduktionsanlage
- 12: Reduktionsschacht
- 13: Kühlteil
- 14: Fördereinrichtung
- 15: Bunkerreservoir
- 16: Schaumschlacke

## Patentansprüche

1. Verfahren zur Herstellung von flüssigem Roheisen, umfassend die Schritte:
i) Bereitstellen eines direkt reduzierten Eisenprodukts (1) (DRI-Produkt) mit einem Eisengehalt von mindestens 75.0 Gew.-%, einem Kohlenstoffgehalt von zumindest 0.10 Gew.-% sowie einem Gehalt an sauren und basischen Schlackenbestandteilen ausgewählt aus der Gruppe umfassend CaO, SiO₂, MgO und Al₂O₃ von maximal 15.0 Gew.-%,
ii) Zuführen des DRI-Produkts (1) unter Zugabe von Schlackenbildnern (2) in ein elektrisch betriebenes Einschmelzaggregat (3),
iii) Zuführen von weiteren Eisen- und/oder Kohlenstoffkomponenten (5) bis zu einem Anteil von 30 Gew.-% bezogen auf die DRI-Produktmenge in das elektrisch betriebene Einschmelzaggregat (3),
iv) Einschmelzen des DRI-Produkts (1) sowie ggf. der weiteren Eisen- und/oder Kohlenstoffkomponenten (5) in Gegenwart der Schlackenbildner (2), so dass eine flüssige Roheisenphase (6) und eine flüssige Schlackenphase (7) gebildet wird,
v) Einstellen der Schlackenphase (7) derart, dass diese eine Basizität von (CaO+MgO/SiO₂) von 0.95 bis 1.5 aufweist,
vi) Abstechen der flüssigen Roheisenphase (6), und
vii) Abstechen und Granulieren der Schlackenphase (7).

2. Verfahren nach Anspruch 1, wobei die Schlackenphase (7) derart eingestellt wird, dass diese eine Basizität von (CaO+MgO/SiO₂) von 1.0 bis 1.40, vorzugsweise eine Basizität von (CaO+MgO /SiO₂) von 1.0 bis 1.25, aufweist.

3. Verfahren nach einem der vorhergehenden Ansprüche, wobei die Schlackenphase (7) bei einer Abstichtemperatur im Bereich von 1300 °C bis 1600 °C abgestochen wird.

4. Verfahren nach einem der vorhergehenden Ansprüche, wobei die Schlackenbildner (2) ausgewählt sind aus der Gruppe umfassend CaO, SiO₂, MgO, Al₂O₃ und/oder Mischoxiden hiervon.

5. Verfahren nach einem der vorhergehenden Ansprüche, wobei die Schlackenbildner (2) gemäß Schritt ii) bis zu einem Anteil von maximal 15.0 Gew.-%, bevorzugt von maximal 10.0 Gew.-% bezogen auf die zugeführte DRI-Produktmenge zugeführt werden.

6. Verfahren nach einem der vorhergehenden Ansprüche, wobei die Eisen- und/oder Kohlenstoffkomponenten (5) gemäß Schritt iii) bis zu einem Anteil von maximal 30.0 Gew.-%, bevorzugt von maximal 25.0 Gew.-%, mehr bevorzugt von maximal 20.0 Gew.-% bezogen auf die zugeführte DRI-Produktmenge zugeführt werden.

7. Verfahren nach einem der vorhergehenden Ansprüche, wobei das Granulieren als Nass- oder Trockengranulation durchgeführt wird.

8. Verfahren nach einem der vorhergehenden Ansprüche, wobei die Zugabe der Schlackenbildner (2) automatisch über ein in eine Anlagenautomation integriertes Prozessmodel erfolgt, anhand dessen die Zugabemenge an den Schlackenbildnern (2) berechnet und als Funktion von Prozessparametern festgelegt wird.

9. Verfahren nach einem der vorhergehenden Ansprüche, wobei das direkt reduzierte Eisenprodukt (1) dem Einschmelzaggregat (3) in heißer Form als HDRI-Produkt, in kalter Form als CDRI-Produkt, in heißer Brikettform als HBI-Produkt und/oder in partikulärer Form, vorzugsweise mit einem mittleren Partikeldurchmesser von maximal 10.0 mm, zugeführt wird.

10. Verfahren nach einem der vorhergehenden Ansprüche, wobei die gemäß Schritt iv) gebildete flüssige Roheisenphase (6) auf einen Kohlenstoffgehalt von zumindest 2.50 Gew.-% aufgekohlt wird.

11. Verfahren nach einem der vorhergehenden Ansprüche, wobei das DRI-Produkt (1) und/oder die Schlackenbildner (2) aus einem, vorzugsweise wärmeisolierten, Bunkerreservoir (15) dem Einschmelzaggregat (3) zugeführt werden.

12. Verfahren nach einem der vorhergehenden Ansprüche, wobei das DRI-Produkt (1) in einer Direktreduktionsanlage (11) hergestellt und über eine Fördereinrichtung (14) dem Einschmelzaggregat (3) und/oder dem Bunkerreservoir (15) unter Schutzatmosphäre zugeführt wird.

## Claims

1. Method of producing liquid pig iron, comprising the steps:
i) preparing a direct reduced iron product (1) (DRI product) with an iron content of at least 75.0 weight %, a carbon content of at least 0.10 weight % and a content of acidic and basic slag constituents, which is selected from the group comprising CaO, SiO₂, MgO and Al₂O₃, of at most 15.0 weight %,
ii) feeding the DRI product (1) with addition of slag formers (2) into an electrically operated smelting unit (3),
iii) feeding further iron and/or carbon components (5) up to a proportion of 30 weight % referred to the DRI product quantity into the electrically operated smelting unit (3),
iv) smelting the DRI product (1) as well as optionally the further iron and/or carbon components (5) in the presence of the slag formers (2) so that a liquid pig iron phase (6) and a liquid slag phase (7) are formed,
v) setting the slag phase (7) in such a way that this has a basicity of (CaO + MgO/SiO₂) of 0.95 to 1.5,
vi) tapping the liquid pig iron phase (6) and
vii) tapping and granulating the slag phase (7).

2. Method according to claim 1, wherein the slag phase (7) is set so that this has a basicity of (CaO + MgO/SiO₂) of 1.0 to 1.40, preferably a basicity of (CaO + MgO/SiO₂) of 1.0 to 1.25.

3. Method according to any one of the preceding claims, wherein the slag phase (7) is tapped at a tap temperature in range of 1300° C to 1600° C.

4. Method according to any one of the preceding claims, wherein the slag formers (2) are selected from the group comprising CaO, SiO₂, MgO, Al₂O₃ and/or mixed oxides thereof.

5. Method according to any one of the preceding claims, wherein the slag formers (2) are fed according to step ii) up to a proportion of at most 15.0 weight %, preferably at most 10.0 weight %, referred to the fed DRI product quantity.

6. Method according to any one of the preceding claims, wherein the iron and/or carbon components (5) are fed according to step iii) up to a proportion of at most 30.0 weight %, preferably at most 25.0 weight %, more preferably at most 20.0 weight %, referred to the fed DRI product quantity.

7. Method according to any one of the preceding claims, wherein the granulation is undertaken as wet granulation or dry granulation.

8. Method according to any one of the preceding claims, wherein the addition of the slag formers (2) is carried out automatically by way of a process model which is integrated in a plant automation system and on the basis of which the addition quantity of the slag formers (2) is calculated and is fixed as a function of process parameters.

9. Method according to any one of the preceding claims, wherein the direct reduced iron product (1) is fed to the smelting unit (3) in hot form as HDRI product, in cold form as CDRI product, in hot briquette form as HBI product and/or in particulate form, preferably with a mean particle diameter of at most 10.0 mm.

10. Method according to any one of the preceding claims, wherein the liquid pig iron phase (6) formed in accordance with step iv) is carburised to a carbon content of at least 2.50 weight %.

11. Method according to any one of the preceding claims, wherein the DRI product (1) and/or the slag formers (2) is or are fed to the smelting unit (3) from a bunker reservoir (15), which is preferably thermally insulated.

12. Method according to any one of the preceding claims, wherein the DRI product (1) is produced in a direct reduction plant (11) and fed by way of a conveyor device (14) to the smelting unit (3) and/or to the bunker reservoir (15) under a protective atmosphere.

## Revendications

1. Procédé de fabrication de fonte brute liquide, comprenant les étapes :
i) fourniture d'un produit de fer réduit directement (1) (produit DRI) avec une teneur en fer d'au moins 75,0 % en poids, une teneur en carbone d'au moins 0,10 % en poids et une teneur en constituants de scories acides et basiques choisis dans le groupe comprenant CaO, SiO₂, MgO et Al₂O₃ de 15,0 % en poids maximum,
ii) introduction du produit DRI (1) avec ajout de formateurs de scories (2) dans une unité de fusion à commande électrique (3),
iii) introduction d'autres composants de fer et/ou de carbone (5) jusqu'à une proportion de 30 % en poids par rapport à la quantité de produit DRI dans l'unité de fusion à commande électrique (3),
iv) fusion du produit DRI (1) et éventuellement des autres composants de fer et/ou de carbone (5) en présence des formateurs de scories (2), de sorte qu'une phase de fonte brute liquide (6) et une phase de scories liquides (7) sont formées,
v) réglage de la phase de scories (7) de telle sorte qu'elle présente une basicité de (CaO+MgO/SiO₂) de 0,95 à 1,5,
vi) évacuation de la phase de fonte brute liquide (6), et
vii) évacuation et granulation de la phase de scories (7).

2. Procédé selon la revendication 1, où la phase de scories (7) est réglée de telle sorte qu'elle présente une basicité de (CaO+MgO/SiO₂) de 1,0 à 1,40, de préférence une basicité de (CaO+MgO/SiO₂) de 1,0 à 1,25.

3. Procédé selon l'une quelconque des revendications précédentes, où la phase de scories (7) est évacuée à une température d'évacuation dans la plage de 1300°C à 1600°C.

4. Procédé selon l'une quelconque des revendications précédentes, où les formateurs de scories (2) sont choisis dans le groupe comprenant CaO, SiO₂, MgO, Al₂O₃ et/ou leurs mélanges d'oxydes.

5. Procédé selon l'une quelconque des revendications précédentes, où les formateurs de scories (2) sont introduits selon l'étape ii) jusqu'à une proportion maximale de 15,0 % en poids, de préférence de 10,0 % en poids maximum par rapport à la quantité de produit DRI introduite.

6. Procédé selon l'une quelconque des revendications précédentes, où les composants de fer et/ou de carbone (5) sont introduits selon l'étape iii) jusqu'à une proportion maximale de 30,0 % en poids, de préférence de 25,0 % en poids maximum, plus préférablement de 20,0 % en poids maximum par rapport à la quantité de produit DRI introduite.

7. Procédé selon l'une quelconque des revendications précédentes, où la granulation est effectuée par granulation humide ou sèche.

8. Procédé selon l'une quelconque des revendications précédentes, où l'ajout des formateurs de scories (2) est effectué automatiquement par un modèle de processus intégré dans une automatisation d'installation, sur la base duquel la quantité d'ajout des formateurs de scories (2) est calculée et définie en fonction des paramètres de processus.

9. Procédé selon l'une quelconque des revendications précédentes, où le produit de fer réduit directement (1) est introduit dans l'unité de fusion (3) sous forme chaude en tant que produit HDRI, sous forme froide en tant que produit CDRI, sous forme de briquettes chaudes en tant que produit HBI et/ou sous forme particulaire, de préférence avec un diamètre de particule moyen de 10,0 mm maximum.

10. Procédé selon l'une quelconque des revendications précédentes, où la phase de fonte brute liquide (6) formée selon l'étape iv) est carbonée à une teneur en carbone d'au moins 2,50 % en poids.

11. Procédé selon l'une quelconque des revendications précédentes, où le produit DRI (1) et/ou les formateurs de scories (2) sont introduits dans l'unité de fusion (3) à partir d'un réservoir de stockage (15), de préférence thermiquement isolé.

12. Procédé selon l'une quelconque des revendications précédentes, où le produit DRI (1) est fabriqué dans une installation de réduction directe (11) et introduit dans l'unité de fusion (3) et/ou le réservoir de stockage (15) sous atmosphère protectrice par un dispositif de transport (14).
